# EUROPÄISCHE PATENTSCHRIFT

(11) **EP 1 798 117 B1**
(45) Veröffentlichungstag und Bekanntmachung des Hinweises auf die Patenterteilung: **14.06.2017**
(21) Anmeldenummer: 05027748.2
(22) Anmeldetag: 19.12.2005
(51) Int. Cl.: B60R 21/16

(54) **Luftsackmodul**
Airbag module
Module de sac gonflable

(43) Veröffentlichungstag der Anmeldung: 20.06.2007
(73) Patentinhaber: Autoliv Development AB, 447 83 Vårgårda (SE)
(72) Erfinder: Guthke, Detlev, 58089 Hagen (DE); Maiwald, Helmut, 51515 Kürten (DE); Kreher, Andre-Stephan, 42289 Wuppertal (DE)
(74) Vertreter: Schön, Thilo

(56) Entgegenhaltungen:
- GB-A- 2 399 795
- US-A1- 2002 047 253
- PATENT ABSTRACTS OF JAPAN Bd. 1999, Nr. 08, 30. Juni 1999 (1999-06-30) & JP 11 059311 A (HONDA MOTOR CO LTD), 2. März 1999 (1999-03-02)

## Beschreibung

Die Erfindung betrifft ein Luftsackmodul für ein Kraftfahrzeug mit einem durch einen Gasgenerator aufblasbaren Luftsack, welcher im Montagezu-stand zu einem Paket zusammengefaltet ist.

Ein Luftsackmodul der eingangs genannten Art ist grundsätzlich bekannt. Üblicherweise ist der Luftsack so kompakt zusammengefaltet, dass das Luftsackpaket eine möglichst geringe Baugröße aufweist. Auf diese Weise lässt sich das Luftsackmodul besonders Platz sparend an einem Dachrahmen einer Fahrzeugkarosserie oder in einem Fahrzeugsitz anordnen.

Ein bekanntes in einem Fahrzeugsitz untergebrachtes Luftsackmoduls, welches auch als Seitenairbagmodul bezeichnet wird, ist zwischen einem Rückenlehnenrahmen und einem Polstermaterial des Fahrzeugsitzes angeordnet und insbesondere in eine in dem Polstermaterial vorgesehene Aussparung eingebettet. An seiner Außenseite ist das Polstermaterial von einem Sitzbezug umgeben.

In dem Polstermaterial ist ein Schlitz vorgesehen, welcher von der Aussparung des Polstermaterials bis zu dem Sitzbezug reicht. Im Bereich des Schlitzes weist der Sitzbezug eine Solltrennstelle, beispielsweise eine Reißnaht, auf.

Bei einer Auslösung des Luftsackmoduls wird der Luftsack durch das durch den Gasgenerator freigesetzte Gas aufgeblasen. Dabei erfolgt die Entfaltung des Luftsacks zu Beginn des Aufblasvorgangs nicht in einer ausgeprägten Richtung, sondern der expandierende Luftsack dehnt sich gleichmäßig in verschiedene Richtungen aus.

Der sich aufblasende Luftsack erzeugt in dem Sitzbezug eine Spannung, die solange zunimmt, bis die Reißfestigkeit der Reißnaht überschritten wird und die Reißnaht aufreißt. Durch die im Wesentlichen gleichmäßige Expansion des Luftsacks in verschiedene Richtungen verteilt sich die in dem Sitzbezug erzeugte Spannung über einen größeren Bereich des Sitzbezugs. Folglich wird auch die Reißnaht über eine größere Länge belastet, so dass sie relativ spät aufreißt. Dadurch kann der Luftsack erst vergleichsweise spät aus dem Fahrzeugsitz austreten. Außerdem hängt der Aufreißwiderstand des Sitzbezugs von der Beschaffenheit sowohl des Sitzbezugs als auch der Reißnaht ab, so dass es bei unterschiedlichen Sitzbezügen und aufgrund von Toleranzen in den Reißnähten zu unterschiedlichen Austrittszeitpunkten kommen kann.

Darüber hinaus kann der durch den sich aufblasenden Luftsack erzeugte Hinterschnitt des Polstermaterials, sofern keine zusätzlichen Sicherheitsmaßnahmen getroffen werden, zu einer Separation des Polstermaterials führen, wodurch ein Fahrzeuginsasse verletzt werden kann und die Wiederherstellung des Fahrzeugsitzes erschwert wird.

Aus der GB-A-2 399 795 ist ein Airbag bekannt, der aus zwei übereinander gelegten Textillagen besteht, die einen größeren Airbagabschnitt und einen kleineren Airbagabschnitt bilden. Die Airbagabschnitte weisen jeweils eine stumpfkegelförmige oder trichterförmige Gestalt auf und laufen voneinander weg auseinander. An dem kleineren Airbagabschnitt ist ein Gaszuführungskanal angeformt, der zum Verbinden des Airbags mit einem Gasgenerator dient. Zur Montage des Airbags wird der kleinere Airbagabschnitt nach innen in den größeren Airbagabschnitt gestülpt. In dem größeren Airbagabschnitt ist eine Öffnung vorgesehen, durch die der Gaszuführungskanal des nach innen gestülpten kleineren Airbagabschnitts zur Verbindung mit dem Gasgenerator nach außen geführt wird. Anschließend wird der so vorbereitete Airbag zu einem Paket zusammengefaltet oder aufgerollt. Das so hergestellte Airbagpaket ist zur Unterbringung in einem Sicherheitsgurt vorgesehen.

Die JP 11059311 A offenbart einen in der Rückenlehne eines Fahrzeugsitzes untergebrachten Seitenairbag, welcher so gefaltet ist, dass er sich bei seiner Auslösung zunächst vertikal nach oben und unten und anschließend longitudinal entfaltet. Die US-A1-2002/0047253 Offenbart einen in der Rückenlehne eines Fahrzeugsitzes Untergebrachten Seitenairbag.

Der Erfindung liegt die Aufgabe zugrunde, ein Luftsackmodul für ein Kraftfahrzeug zu schaffen, welches einen verbesserten Schutz eines Fahrzeuginsassen bietet.

Zur Lösung der Aufgabe ist ein Luftsackmodul nach Anspruch 1 bzw. 4 vorgesehen.

Das Luftsackmoduls nach Anspruch 1 umfasst einen durch einen Gasgenerator aufblasbaren Luftsack, welcher im Montagezustand derart zu einem Paket zusammengefaltet ist, dass ein Erstentfaltungsabschnitt des Luftsacks fahnenartig von dem Luftsackpaket absteht.

Im Unterschied zu herkömmlichen Luftsackpaketen, bei denen der Luftsack mit dem Ziel einer größtmöglichen Kompaktheit gefaltet wird, ist der Luftsack erfindungsgemäß so gefaltet, dass sich gerade kein minimales Volumen des Luftsackpakets ergibt, sondern dass ein Faltabschnitt des Luftsacks von dem übrigen Luftsackpaket absteht.

Die Faltung erfolgt dabei derart, dass der abstehende Faltabschnitt einen Erstentfaltungsabschnitt bildet, d.h. also einen Abschnitt, der sich beim Aufblasen des Luftsacks zuerst entfaltet. Durch das Vorsehen eines solchen Erstentfaltungsabschnitts wird zumindest während einer frühen Phase des Aufblasvorgangs eine kontrollierte und insbesondere an einem vorbestimmten Ort und in einer gewünschten Sollausbreitungsrichtung erfolgende Entfaltung des Luftsacks erreicht.

Handelt es sich bei dem Luftsackmodul beispielsweise um ein Seitenairbagmodul, so kann der von dem Luftsackpaket abstehende Erstentfaltungsabschnitt des Luftsacks bereits bei der Montage des Luftsackmoduls in einem Fahrzeugsitz in einen Schlitz eingebracht werden, der in einem Polstermaterial des Fahrzeugsitzes vorgesehen ist und sich in Richtung einer Reißnaht eines Sitzbezugs des Fahrzeugsitzes erstreckt.

Bei einer Auslösung des Luftsackmoduls entfaltet sich zunächst der in den Schlitz hineinragende Erstentfaltungsabschnitt, wodurch das an den Schlitz angrenzende Polstermaterial auseinander gedrückt wird. Da in dieser Anfangsphase des Aufblasvorgangs zunächst keine wesentliche Relativbewegung zwischen Luftsack und Polstermaterial erfolgt, wird der durch den Gasgenerator erzeugte Gasdruck zumindest annähernd verlustfrei und somit besonders wirksam zum Auseinanderdrücken des Polstermaterials im Bereich des Schlitzes genutzt.

Durch die zunächst auf den Bereich des Schlitzes beschränkte Verdrängung des Polstermaterials wird ferner die zum Aufreißen der Reißnaht erforderliche Spannung in einem vergleichsweise kleinen die Reißnaht umgebenden Bereich des Sitzbezugs aufgebaut. Die Spannung wird mit anderen Worten konzentriert in dem Bereich der Reißnaht erzeugt, d.h. die Reißnaht wird gezielt beaufschlagt.

Dies führt zu einem im Vergleich zum Stand der Technik früheren Aufreißen der Reißnaht und somit zu einem schnelleren Austritt des sich aufblasenden Luftsacks aus dem Fahrzeugsitz. Dabei erfolgt das durch den Erstentfaltungsabschnitt des Luftsacks verursachte Aufreißen der Reißnaht so schnell, dass der Einfluss der Beschaffenheit des Sitzbezugs bzw. der Reißnaht auf den Austrittszeitpunkt im Wesentlichen vernachlässigbar ist.

Darüber hinaus ist die Gefahr einer Separation von durch den Luftsack verdrängtem Polstermaterial reduziert. Im Ergebnis wird also ein verbesserter Schutz eines Fahrzeuginsassen erreicht.

Gemäß einer vorteilhaften Ausführungsform des Luftsackmoduls ist eine in dem Luftsack angeordnete Gasführung vorgesehen, durch die das durch den Gasgenerator freigesetzte Gas zumindest zu Beginn eines Aufblasvorgangs in den Erstentfaltungsabschnitt lenkbar ist. Die Gasführung leitet das freigesetzte Gas also gezielt in den Erstentfaltungsabschnitt. Dadurch ist sichergestellt, dass sich zu Beginn des Aufblasvorgangs vor allem der Erstentfaltungsabschnitt entfaltet. Auf diese Weise kann z.B. eine in einem Sitzbezug eines Fahrzeugsitzes befindliche Reißnaht noch wirksamer beaufschlagt werden, wodurch ein noch schnellerer Austritt eines sich aufblasenden Luftsacks aus dem Fahrzeugsitz erreicht wird.

Um sicherzustellen, dass zu Beginn eines Aufblasvorgangs ausschließlich der Erstentfaltungsabschnitt des Luftsacks mit durch den Gasgenerator freigesetztem Gas beaufschlagt wird, kann die Gasführung in den Erstentfaltungsabschnitt des Luftsacks hineinragen.

Die Gasführung ist bevorzugt schlauchartig ausgebildet. Dies stellt eine besonders einfache und effiziente Form der Gasführung dar.

Um eine noch konzentriertere Beaufschlagung des Erstentfaltungsabschnitts zu ermöglichen, kann sich der Querschnitt der Gasführung ausgehend von dem Gasgenerator in Richtung der Längserstreckung der Gasführung verjüngen. Diese Richtung wird nachfolgend auch Längsrichtung genannt und bezeichnet letztlich die Richtung, in welcher die Gasführung im vollständig entfalteten Zustand von Gas durchströmt wird. Zusätzlich zu der Konzentration der Gasströmung erleichtert die Verjüngung der Gasführung ein Zusammenfalten der Gasführung und insbesondere ein nach innen Umstülpen der Gasführung.

Vorteilhafterweise ist die Gasführung im Montagezustand zumindest abschnittsweise getrennt von dem Luftsack gefaltet. Dies ermöglicht eine von der Entfaltung des Luftsacks unabhängige Entfaltung der Gasführung und somit eine noch effizientere Lenkung des Gases in den Erstentfaltungsabschnitt des Luftsacks.

Die Gasführung kann im Montagezustand beispielsweise wenigstens einmal nach innen gestülpt sein. Diese Form der Faltung ermöglicht zum einen eine besonders schnelle Entfaltung der Gasführung. Zum anderen kann die Gasführung durch das nach innen Umstülpen besonders gut an die Form und insbesondere an die Länge des Erstentfaltungsabschnitts angepasst werden. Außerdem erlaubt diese Faltungsform eine besonders einfache Komprimierung einer längeren Gasführung, durch welche sich die ausschließliche Beaufschlagung des Erstentfaltungsabschnitts des Luftsacks länger aufrechterhalten lässt.

Um zu gewährleisten, dass das bei Auslösung des Luftsackmoduls durch den Gasgenerator freigesetzte Gas ausschließlich durch die Gasführung geführt wird, kann der Gasgenerator zumindest bereichsweise von der Gasführung und insbesondere von einem geschlossenen Endabschnitt der Gasführung umschlossen sein.

Gemäß einer weiteren Ausführungsform ist ein von dem Gasgenerator abgewandter Endabschnitt der Gasführung so verschlossen, dass das durch den Gasgenerator freigesetzte Gas nicht in Längsrichtung der Gasführung aus dieser austreten kann. Dadurch wird verhindert, dass das durch die Gasführung strömende Gas direkt auf den Luftsack auftrifft und das Material des Luftsacks beschädigt.

Vorteilhafterweise ist im Bereich des Endabschnitts mindestens eine Öffnung vorgesehen, durch die das durch den Gasgenerator freigesetzte Gas quer zur Längsrichtung der Gasführung aus dieser austreten kann. Der verschlossene Endabschnitt und die Öffnung bewirken also eine Umlenkung des durch die Gasführung strömenden Gases, wodurch ein schnelles Aufblasen des Erstentfaltungsabschnitts bei gleichzeitiger Schonung des Luftsackmaterials erreicht wird.

Damit sich die Gasführung leicht in eine kompakte Form bringen und bei Auslösung des Luftsackmoduls wieder entfalten lässt, ist die Gasführung aus einem flexiblen Material und insbesondere aus einem im Wesentlichen gasundurchlässigen Gewebe gebildet. Beispielsweise kann die Gasführung aus dem gleichen Material wie der Luftsack gebildet sein.

Weiterer Gegenstand der Erfindung ist ein Luftsackmodul für ein Kraftfahrzeug mit einem durch einen Gasgenerator aufblasbaren Luftsack, welcher im Montagezustand zu einem Paket zusammengefaltet ist, und mit einer in dem Luftsack angeordneten Gasführung, durch die das durch den Gasgenerator freigesetzte Gas zumindest zu Beginn eines Aufblasvorgangs in einen Erstbeaufschlagungsbereich des Luftsacks lenkbar ist.

Um zu gewährleisten, dass das bei Auslösung des Luftsackmoduls durch den Gasgenerator freigesetzte Gas ausschließlich durch die Gasführung geführt wird, ist der Gasgenerator zumindest bereichsweise von der Gasführung und insbesondere von einem geschlossenen Endabschnitt der Gasführung umschlossen.

Durch die Gasführung kann das freigesetzte Gas konzentriert und kontrolliert in einen nahezu beliebigen Luftsackbereich geleitet werden, in welchem das Gas zuerst wirken und eine gewünschte Funktion erfüllen soll. Wie voranstehend bereits beschrieben wurde, kann das freigesetzte Gas beispielsweise in einen Abschnitt des Luftsacks gelenkt werden, der sich bei einer Auslösung des Luftsackmoduls zuerst entfalten soll, um dadurch die Sicherheit eines Fahrzeuginsassen zu erhöhen.

Die Gasführung kann gemäß einer der voranstehend beschriebenen Arten ausgebildet sein, wodurch die entsprechenden Vorteile erreichbar sind.

Weiterer Gegenstand der Erfindung ist außerdem ein Kraftfahrzeugsitz mit einem Luftsackmodul gemäß einer der voranstehend beschriebenen Arten. Die in Verbindung mit den Luftsackmodulen erläuterten Vorteile werden durch den erfindungsgemäßen Kraftfahrzeugsitz entsprechend erreicht.

Insbesondere ist ein erhöhter Fahrzeuginsassenschutz sichergestellt, wenn ein Erstentfaltungsabschnitts des Luftsackmoduls in einen in einem Polstermaterial des Fahrzeugsitzes vorgesehenen Schlitz hineinragt, welcher sich in Richtung einer in einem Sitzbezug des Fahrzeugsitzes vorgesehenen Solltrennstelle, z.B. Reißnaht, erstreckt.

Nachfolgend wird die Erfindung rein beispielhaft anhand vorteilhafter Ausführungsformen unter Bezugnahme auf die beigefügte Zeichnung beschrieben. Es zeigen:
- Fig. 1A bis C: eine Draufsicht auf ein eine Gasführung aufweisendes erfindungsgemäßes Luftsackmodul in verschiedenen Entfaltungszuständen des Luftsacks;
- Fig. 2A bis C: eine Seitenansicht der Gasführung von Fig. 1 in den Entfaltungszuständen von Fig. 1; und
- Fig. 3A bis E: einen Querschnitt durch die Rückenlehne eines erfindungsgemäßen Kraftfahrzeugsitzes mit einem Luftsackmodul in verschiedenen Entfaltungszuständen des Luftsacks.

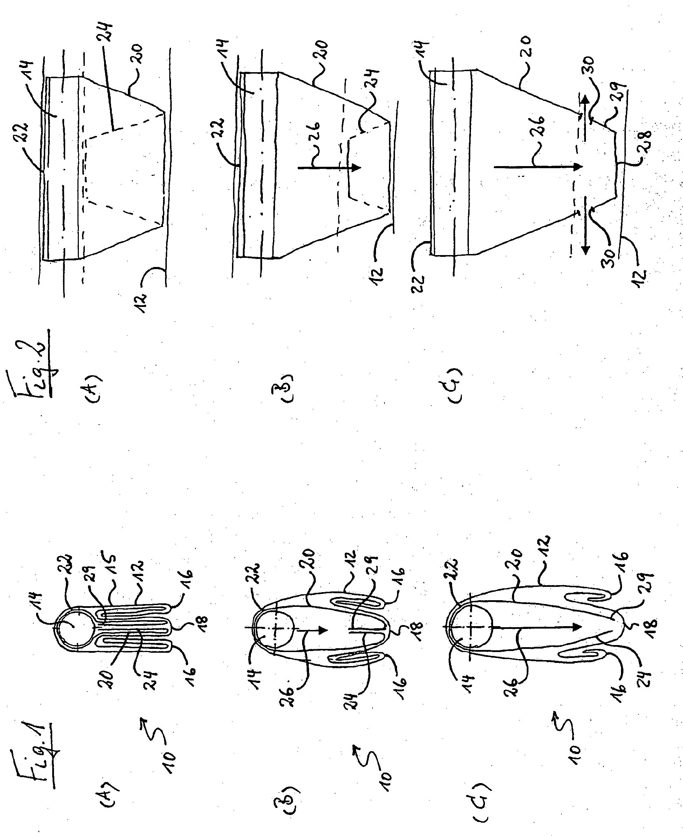

Das in Fig. 1 dargestellte Luftsackmodul 10 umfasst einen Luftsack 12 und einen in dem Luftsack 12 untergebrachten Gasgenerator 14 zum Aufblasen des Luftsacks 12.

Fig. 1A zeigt das Luftsackmodul 10 in einem Montagezustand, in welchem der Luftsack 12 zu einem Paket 15 zusammengefaltet ist. Im dargestellten Ausführungsbeispiel umfasst das Luftsackpaket 15 drei nebeneinander angeordnete und sich im Wesentlichen parallel zueinander erstreckende Faltabschnitte 16, 18, wobei die beiden äußeren Faltabschnitte 16 jeweils durch ein einmaliges nach innen Falten des Luftsacks 12 gebildet sind.

Das Luftsackmodul 10 umfasst ferner eine in dem Luftsack 12 angeordnete Gasführung 20. Die Gasführung 20 ist schlauch- oder strumpfartig ausgebildet und weist ein im Wesentlichen gasundurchlässiges Gewebe auf. Beispielsweise kann die Gasführung 20 aus dem gleichen Material wie der Luftsack 12 gebildet sein. Ein erster Endabschnitt 22 der Gasführung ist im Wesentlichen gasdicht verschlossen und umschließt den Gasgenerator 14.

Ausgehend von dem Gasgenerator 14 erstreckt sich die Gasführung 20 in einen von den äußeren Faltabschnitten 16 flankierten mittleren Faltabschnitt 18 des Luftsackpakets 15. Dabei ist ein dem Gasgenerator 14 abgewandter Abschnitt 24 der Gasführung 20 wenigstens einmal nach innen umgestülpt, um die Länge der Gasführung 20 im zusammengefalteten Zustand des Luftsacks 12 an die Länge des mittleren Faltabschnitts 18 anzupassen.

Die Gasführung 20 sorgt dafür, dass das bei Auslösung des Luftsackmoduls 10 durch den Gasgenerator 14 freigesetzte Gas zunächst ausschließlich in den mittleren Faltabschnitt 18 des Luftsacks 12 geleitet wird. Genauer gesagt bewirkt die Gasführung 20 eine Kanalisation des durch den Gasgenerator 14 freigesetzten Gases in einer Längsrichtung 26 der Gasführung 20, wodurch der mittlere Faltabschnitt 18 des Luftsacks 12 in Längsrichtung 26 beaufschlagt und aus dem Luftsackpaket 15 herausgetrieben wird.

Die gezielte Beaufschlagung des mittleren Faltabschnitts 18 führt dazu, dass sich zunächst nur der mittlere Faltabschnitt 18 ausdehnt bzw. entfaltet. Der mittlere Faltabschnitt 18 stellt mit anderen Worten also einen Erstentfaltungsabschnitt dar.

Wie den Fig. 1B und 1C zu entnehmen ist, entfaltet sich während des Aufblasens des mittleren Faltabschnitts 18 auch die Gasführung 20 (vgl. hierzu auch Fig. 2B und 2C). Dabei ist eine zumindest annähernd ausschließliche Beaufschlagung des mittleren Faltabschnitts 18 gewährleistet, solange die Gasführung 20 im Wesentlichen vollständig in den mittleren Faltabschnitt 18 hineinragt und zumindest annähernd bis an das dem Gasgenerator 14 abgewandte Ende des Faltabschnitts 18 heranreicht.

Wie Fig. 1B und 1C zeigen, bewirkt das Aufblasen des mittleren Faltabschnitts 18 ab einem gewissen Ausdehnungsgrad mittelbar auch eine Entfaltung der äußeren Faltabschnitte 16.

Mit der vollständigen Entfaltung der Gasführung 20 (Fig. 1C und 2C) endet die bevorzugte Beaufschlagung des mittleren Faltabschnitts 18, so dass sich auch der übrige Teil des Luftsacks 12 mit dem aus der Gasführung 20 ausströmenden Gas füllen und ausdehnen kann.

In Fig. 1 ist die Gasführung 20 an ihrem dem Gasgenerator 14 abgewandten Ende in Längsrichtung 26 gesehen offen dargestellt. Eine derartige Ausbildung der Gasführung 20 ist grundsätzlich möglich, bedeutet aber, dass das in Längsrichtung 26 durch die Gasführung 20 hindurch strömende Gas in der in Fig. 1C dargestellten Situation konzentriert auf den Faltabschnitt 18 auftrifft und dort eine Beschädigung des Luftsackmaterials verursachen kann.

Tatsächlich ist die dem Gasgenerator 14 abgewandte Stirnseite 28 der Gasführung 20 daher in Längsrichtung 26 gesehen verschlossen. Stattdessen sind im Bereich der Stirnseite 28, gewissermaßen in der Mantelfläche der Gasführung 20, mindestens zwei Öffnungen 30 vorgesehen, durch die das freigesetzte Gas quer zur Längsrichtung 26 aus der Gasführung 20 ausströmen kann. Der so ausgebildete Endabschnitt 29 der Gasführung 20 bewirkt also eine Umlenkung des Gasstroms, durch die das Material des Luftsacks 12 geschont wird.

Wie in Fig. 2 gezeigt ist, weist die Gasführung 20 einen Querschnitt auf, der ausgehend von dem den Gasgenerator 14 umgebenden Endabschnitt 22 in Richtung des dem Gasgenerator 14 abgewandten Endabschnitts 28 abnimmt. Diese trichterförmige Gestalt der Gasführung 20 führt nicht nur zu einer konzentrierteren Beaufschlagung des mittleren Faltabschnitts 18, sondern erleichtert auch das nach innen Umstülpen der Gasführung 20 bei der Herstellung des Luftsackpakets 15.

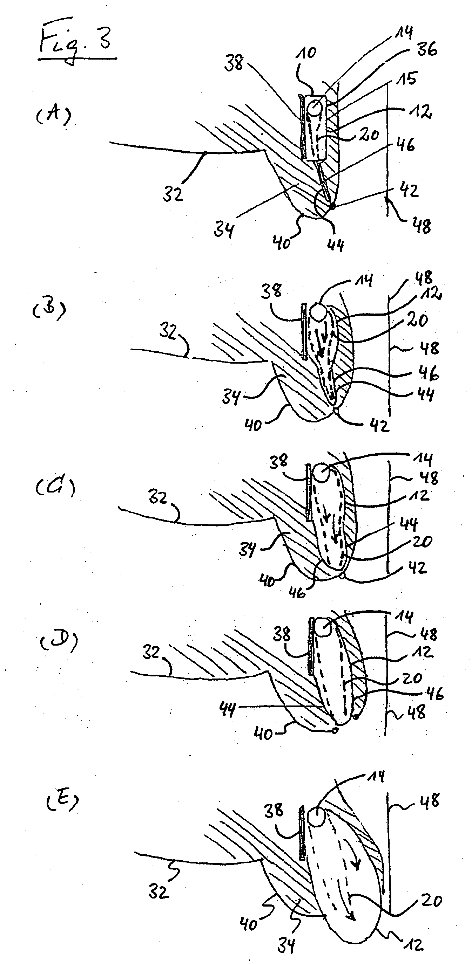

In Fig. 3 ist eine Rückenlehne 32 eines Kraftfahrzeugsitzes dargestellt, in die ein Luftsackmodul 10 eingebaut ist, welches eine ähnliche Ausbildung wie das in Fig. 1 gezeigte Luftsackmodul 10 aufweist. Baugleiche bzw. funktionsgleiche Bauteile des in Fig. 3 gezeigten Luftsackmoduls 10 werden deshalb mit den bereits eingeführten Bezugszeichen bezeichnet.

Das Luftsackmodul 10 ist in ein Polstermaterial 34, beispielsweise ein Schaumstoffmaterial, der Rückenlehne 32 eingebettet. Das Polstermaterial 34 weist zu diesem Zweck eine Aussparung 36 auf. Zusätzlich ist das Luftsackmodul 10 an einem Rahmen 38 der Rückenlehne 32 befestigt.

Das Polstermaterial 34 ist mit einem Sitzbezug 40 überzogen, der eine Solltrennstelle, beispielsweise eine Reißnaht 42, aufweist. In dem Polstermaterial 34 ist ein Schlitz 44 vorgesehen, der sich ausgehend von der Aussparung 36 in Richtung der Reißnaht 42 erstreckt und insbesondere bis an diese heranreicht.

Wie in Fig. 3A zu erkennen ist, weist das Luftsackmodul 10 einen Erstentfaltungsabschnitt 46 des Luftsacks 12 auf, der nach Art einer Fahne von dem Luftsackpaket 15 absteht. Bei dem Erstentfaltungsabschnitt 46 kann es sich beispielsweise um einen mittleren Faltabschnitt 18 eines wie in Fig. 1A gefalteten Luftsacks 12 handeln, wobei der Erstentfaltungsabschnitt 46 des in Fig. 3 dargestellten Luftsackmoduls 10 vergleichsweise länger als der in Fig. 1A gezeigte mittlere Faltabschnitt 18 ausgebildet ist und insbesondere über entsprechende äußere Faltabschnitte 16 hinausragt.

Wie Fig. 3 zeigt, ist das Luftsackmodul 10 so in das Polstermaterial 34 eingebettet, dass der von dem Luftsackpaket 15 abstehende Erstentfaltungsabschnitt 46 in den im Polstermaterial 34 befindlichen Schlitz 44 hineinragt und zumindest annähernd bis an die Reißnaht 42 des Sitzbezugs 40 heranreicht.

Mit dem Bezugszeichen 48 ist die Innenverkleidung einer Kraftfahrzeugtür bezeichnet.

Das Aufblasen des in Fig. 3 gezeigten Luftsacks 12 erfolgt ähnlich wie der in Verbindung mit Fig. 1 und 2 beschriebene Aufblasvorgang.

Bei Auslösung des Luftsackmoduls 10 wird der Gasgenerator 14 aktiviert. Das durch den Gasgenerator 14 freigesetzte Gas wird mittels einer zumindest bereichsweise in den Erstentfaltungsabschnitt 46 hineinragenden Gasführung 20 in den Erstentfaltungsabschnitt 46 gelenkt, um zu Beginn des Aufblasvorgangs zunächst eine Entfaltung des Erstentfaltungsabschnitts 46 zu bewirken (Fig. 3B und 3C). Die Gasführung 20 leitet das freigesetzte Gas somit direkt in den Bereich der Reißnaht 42.

Durch den sich aufblasenden Erstentfaltungsabschnitt 46 wird der Schlitz 44 aufgeweitet und das an den Schlitz angrenzende Polstermaterial 34 auseinandergedrückt (Fig. 3B und 3C). Da diese Verdrängung des Polstermaterials 34 nicht nur im Bereich der Aussparung 36, sondern durch die Gasführung 20 von Beginn des Aufblasvorgangs an auch im Bereich der Reißnaht 42 erfolgt, wird eine lokal auf den Bereich der Reißnaht 42 begrenzte Spannung in dem Sitzbezug 40 erzeugt.

Sobald diese Spannung die Reißfestigkeit der Reißnaht 42 überschreitet, bricht die Reißnaht 42 auf (Fig. 3D). Bis zu diesem Augenblick hat noch keine Relativbewegung zwischen dem Material des Luftsacks 12 und dem Polstermaterial 34 stattgefunden, so dass der durch den Gasgenerator 14 erzeugte Gasdruck im Wesentlichen verlustfrei zum Verdrängen des Polstermaterials 34 und somit zum Aufreißen der Reißnaht 42 genutzt wird.

Durch die im frühen Stadium des Aufblasvorgangs durch die Gasführung 20 bewirkte Konzentration des Gasdrucks in dem Bereich der Reißnaht 42 und die im Wesentlichen reibungsverlustfreie Verdrängung des Polstermaterials 34 und somit Spannungserzeugung in dem Sitzbezug 40 wird eine besonders effiziente und insbesondere schnelle Zerstörung der Reißnaht 42 erreicht. Der sich aufblasende Luftsack 12 tritt erfindungsgemäß also schneller aus der Rückenlehne 32 des Fahrzeugsitzes aus und kann einen Fahrzeuginsassen folglich wirksamer schützen, als dies bei einem herkömmlichen Seitenairbagmodul der Fall ist.

Darüber hinaus verringert das frühere Aufreißen der Reißnaht 42 die Gefahr einer Separation von verdrängtem Polstermaterial 34, so dass der Fahrzeuginsasse auch in dieser Hinsicht besser geschützt ist.

### Bezugszeichenliste

- 10: Luftsackmodul
- 12: Luftsack
- 14: Gasgenerator
- 15: Luftsackpaket
- 16: Faltabschnitt
- 18: Faltabschnitt
- 20: Gasführung
- 22: Endabschnitt
- 24: Abschnitt
- 26: Längsrichtung
- 28: Stirnseite
- 29: Endabschnitt
- 30: Öffnung
- 32: Rückenlehne
- 34: Polstermaterial
- 36: Aussparung
- 38: Rahmen
- 40: Sitzbezug
- 42: Reißnaht
- 44: Schlitz
- 46: Erstentfaltungsabschnitt
- 48: Türinnenverkleidung

## Patentansprüche

1. Luftsackmodul (10) für ein Kraftfahrzeug mit einem durch einen Gasgenerator (14) aufblasbaren Luftsack (12), welcher im Montagezustand derart zu einem Paket (15) zusammengefaltet ist, dass ein Erstentfaltungsabschnitt (46) des Luftsacks (12) fahnenartig von dem Luftsackpaket absteht.

2. Luftsackmodul (10) nach Anspruch 1,
**gekennzeichnet durch**
eine in dem Luftsack (12) angeordnete Gasführung (20), durch die das durch den Gasgenerator (14) freigesetzte Gas zumindest zu Beginn eines Aufblasvorgangs in den Erstentfaltungsabschnitt (46) lenkbar ist.

3. Luftsackmodul (10) nach Anspruch 1 oder 2,
**dadurch gekennzeichnet, dass**
der Gasgenerator (14) zumindest bereichsweise von der Gasführung (20) und insbesondere von einem geschlossenen Endabschnitt (22) der Gasführung (20) umschlossen ist.

4. Luftsackmodul (10) nach einem der Ansprüche 2 bis 3,
**dadurch gekennzeichnet, dass**
die Gasführung (20) in den
Erstentfaltungsabschnitt (46) des Luftsacks (12) hineinragt.

5. Luftsackmodul (10) nach einem der Ansprüche 2 bis 4,
**dadurch gekennzeichnet, dass**
die Gasführung (20) schlauchartig ausgebildet ist.

6. Luftsackmodul (10) nach einem der Ansprüche 2 bis 5,
**dadurch gekennzeichnet, dass**
sich der Querschnitt der Gasführung (20) ausgehend von dem Gasgenerator (14) in Richtung (26) der Längserstreckung der Gasführung (20) verjüngt.

7. Luftsackmodul (10) nach einem der Ansprüche 2 bis 6,
**dadurch gekennzeichnet, dass**
die Gasführung (20) im Montagezustand zumindest abschnittsweise unabhängig von dem Luftsack (12) gefaltet ist.

8. Luftsackmodul (10) nach einem der Ansprüche 2 bis 7,
**dadurch gekennzeichnet, dass**
die Gasführung (20) im Montagezustand wenigstens einmal nach innen umgestülpt ist.

9. Luftsackmodul (10) nach einem der Ansprüche 2 bis 8,
**dadurch gekennzeichnet, dass**
ein von dem Gasgenerator (14) abgewandter Endabschnitt (29) der Gasführung (20) so verschlossen ist, dass das durch den Gasgenerator (14) freigesetzte Gas nicht in Richtung (26) der Längserstreckung der Gasführung (20) aus dieser austreten kann.

10. Luftsackmodul (10) nach einem der Ansprüche 2 bis 9,
**dadurch gekennzeichnet, dass**
im Bereich eines von dem Gasgenerator (14) abgewandten Endabschnitts (29) der Gasführung (20) mindestens eine Öffnung (30) vorgesehen ist, durch die das durch den Gasgenerator (14) freigesetzte Gas quer zur Längserstreckung der Gasführung (20) aus dieser austreten kann.

11. Luftsackmodul (10) nach einem der Ansprüche 2 bis 10,
**dadurch gekennzeichnet, dass**
die Gasführung (20) aus einem flexiblen Material und insbesondere aus einem im Wesentlichen gasundurchlässigen Gewebe und bevorzugt aus dem gleichen Material wie der Luftsack (12) gebildet ist.

12. Kraftfahrzeugsitz mit einem Luftsackmodul (10) nach einem der vorherigen Ansprüche.

13. Kraftfahrzeugsitz nach Anspruch 12,
**dadurch gekennzeichnet, dass**
sich ein Erstentfaltungsabschnitt (46) des Luftsackmoduls (10), welcher im Montagezustand fahnenartig von dem Luftsackpaket (15 absteht, in einen in einem Polstermaterial (34) des Kraftfahrzeugsitzes vorgesehenen Schlitz (44) hineinragt, welcher sich in Richtung einer in einem Sitzbezug (40) des Kraftfahrzeugsitzes vorgesehenen Solltrenristelle (42) erstreckt.

## Claims

1. Airbag module (10) for a motor vehicle with an airbag (12) which can be inflated by a gas generator (14) and which is folded together in the mounted state to a packet (15) in such a manner that a first unfolding section (46) of the airbag (12) projects like a flag from the airbag packet.

2. Airbag module (10) according to Claim 1, **characterized by that** a gas conduit (20) arranged in the airbag (12) through which the gas freed by the gas generator (14) can be guided at least at the beginning of an inflation procedure into the first unfolding section (46).

3. Airbag module (10) according to Claim 1 or 2, **characterized by that** the gas generator (14) is surrounded at least in areas by the gas conduit (20) and in particular by a closed end section (22) of the gas conduit (20).

4. Airbag module (10) according to one of Claims 2 to 3, **characterized by that** the gas conduit (20) projects into the first unfolding section (46) of the airbag (12).

5. Airbag module (10) according to one of Claims 2 to 4, **characterized by that** the gas conduit (20) is constructed like a hose.

6. Airbag module (10) according to one of Claims 2 to 5, **characterized by that** the cross section of the gas conduit (20) tapers starting from the gas generator (14) in the direction (26) of the longitudinal extension of the gas conduit (20).

7. Airbag module (10) according to one of Claims 2 to 6, **characterized by that** the gas conduit (20) in the mounted state is folded at least in sections independently of the airbag (12).

8. Airbag module (10) according to one of Claims 2 to 7, **characterized by that** the gas conduit (20) in the mounted state is inverted at least once toward the inside.

9. Airbag module (10) according to one of Claims 2 to 8, **characterized by that** an end section (29) of the gas conduit (20), which section faces away from the gas generator (14), is closed in such a manner that the gas freed by the gas generator (14) cannot exit in direction (26) of the longitudinal extension of the gas conduit (20) from the latter.

10. Airbag module (10) according to one of Claims 2 to 9, **characterized by that** at least one opening (30) is provided in the area of an end section (29) of the gas conduit (20), which section faces away from the gas generator (14) and through which opening the gas freed by the gas generator (14) can exit transversely to the longitudinal extension of the gas conduit (20) from the latter.

11. Airbag module (10) according to one of Claims 2 to 10, **characterized by that** the gas conduit (20) is formed from a flexible material and in particular from a fabric which is substantially impermeable to the gas and preferably consists of the same material as the airbag (12).

12. Motor vehicle seat with an airbag module (10) according to one of the previous claims.

13. Motor vehicle seat according to Claim 12, **characterized by that** a first unfolding section (46) of the airbag module (10), which projects in the mounted state like a flag from the airbag packet (15) projects into a slot (44) provided in a padding material (34) of the motor vehicle seat, which slot extends in the direction of a theoretical separating position (42) provided in a seat cover (40) of the motor vehicle seat.

## Revendications

1. Module de coussin gonflable (10) pour un véhicule automobile, comprenant un coussin gonflable (12) par un système de génération de gaz (14), lequel, à l'état monté, est plié en un paquet (15) de sorte qu'un premier segment de déploiement (46) du coussin gonflable (12) dépasse du paquet du coussin gonflable à la manière d'un drapeau.

2. Module de coussin gonflable (10) selon la revendication 1, **caractérisé par** une conduite de gaz (20) agencée dans le coussin gonflable (12), par laquelle le gaz libéré par le système de génération de gaz (14) peut être dirigé au moins au début d'un processus de gonflage dans le premier segment de déploiement (46).

3. Module de coussin gonflable (10) selon la revendication 1 ou 2, **caractérisé en ce que** le système de génération de gaz (14) est entouré au moins en partie par la conduite de gaz (20) et notamment par un segment terminal fermé (22) de la conduite de gaz (20).

4. Module de coussin gonflable (10) selon l'une quelconque des revendications 2 à 3, **caractérisé en ce que** la conduite de gaz (20) pénètre à l'intérieur du premier segment de déploiement (46) du sac gonflable (12).

5. Module de coussin gonflable (10) selon l'une quelconque des revendications 2 à 4, **caractérisé en ce que** la conduite de gaz (20) est conçue sous la forme d'un tuyau.

6. Module de coussin gonflable (10) selon l'une quelconque des revendications 2 à 5, **caractérisé en ce que** la section transversale de la conduite de gaz (20) se rétrécie depuis le système de génération de gaz (14) dans la direction de l'extension longitudinale de la conduite de gaz (20).

7. Module de coussin gonflable (10) selon l'une quelconque des revendications 2 à 6, **caractérisé en ce que** la conduite de gaz (20) à l'état monté est pliée au moins par endroits de manière indépendante par rapport au coussin gonflable (12).

8. Module de coussin gonflable (10) selon l'une quelconque des revendications 2 à 7, **caractérisé en ce que** la conduite de gaz (20) à l'état monté est inversée au moins une fois vers l'intérieur.

9. Module de coussin gonflable (10) selon l'une quelconque des revendications 2 à 8, **caractérisé en ce qu'**un segment d'extrémité (29) opposé au système de génération de gaz (14) de la conduite de gaz (20) est fermé de sorte que le gaz libéré par le système de génération de gaz (14) ne peut pas sortir de celui-ci dans la direction (26) de l'extension longitudinale de la conduite de gaz (20).

10. Module de coussin gonflable (10) selon l'une quelconque des revendications 2 à 9, **caractérisé en ce qu'**au moins une ouverture (30) est prévue dans la zone d'un segment d'extrémité opposé au système de génération de gaz (14) de la conduite de gaz (20), par laquelle le gaz libéré par le système de génération de gaz (14) peut sortir de celui-ci perpendiculairement par rapport à l'extension longitudinale de la conduite de gaz (20).

11. Module de coussin gonflable (10) selon l'une quelconque des revendications 2 à 10, **caractérisé en ce que** la conduite de gaz (20) est formée dans un matériau flexible et notamment dans un tissu essentiellement imperméable aux gaz, et de préférence dans le même matériau que le coussin gonflable (12).

12. Siège de véhicule automobile muni d'un module de coussin gonflable (10) selon l'une quelconque des revendications précédentes.

13. Siège de véhicule automobile selon la revendication 12, **caractérisé en ce qu'**un premier segment de déploiement (46) du module de coussin gonflable (10), lequel, à l'état monté, est écartée du paquet du coussin gonflable (15) à la manière d'un drapeau, pénètre à l'intérieur d'une fente (44) prévue dans un matériau de rembourrage (34) du siège de véhicule automobile, laquelle s'étend dans la direction d'une zone de rupture prédéterminée (42) prévue dans un revêtement de siège (40) du siège de véhicule automobile.
